# EUROPÄISCHE PATENTSCHRIFT

(11) **EP 1 077 909 B1**
(45) Veröffentlichungstag und Bekanntmachung des Hinweises auf die Patenterteilung: **06.11.2002**
(21) Anmeldenummer: 99932661.4
(22) Anmeldetag: 07.05.1999
(51) Int. Cl.: C04B 41/81, B44C 5/04, B44C 1/22, C03C 17/00

(54) **VERFAHREN ZUM ERZEUGEN EINER STRUKTUR IN EINEM SUBSTRAT**
METHOD FOR PRODUCING A STRUCTURE ON A SUBSTRATE
PROCEDE POUR PRODUIRE UNE STRUCTURE DANS UN SUBSTRAT

(30) Priorität: 08.05.1998 DE 19820754
(43) Veröffentlichungstag der Anmeldung: 28.02.2001
(73) Patentinhaber: Seidl, Günther, 85354 Freising (DE)
(72) Erfinder: Seidl, Günther, 85354 Freising (DE)
(74) Vertreter: Pfenning, Meinig & Partner
(86) Internationale Anmeldenummer: DE9901387
(87) Internationale Veröffentlichungsnummer: WO99058471

(56) Entgegenhaltungen:
- DE-C- 78 952
- PATENT ABSTRACTS OF JAPAN vol. 1995, no. 10, 30. November 1995 (1995-11-30) & JP 07 187861 A (INAX CORP), 25. Juli 1995 (1995-07-25)

## Beschreibung

Die vorliegende Erfindung betrifft ein Verfahren zum Erzeugen einer Struktur in einem Substrat.

Aufgrund der Vielfalt gestalterischer Möglichkeiten zum Erzeugen von Strukturen auf Substraten steigt beispielsweise im Rahmen einer zunehmenden Computerisierung das Bedürfnis dahingehend, auch in Steingut, Glas oder Porzellan als Substrat Schriftzüge bzw. Muster auf einfache Weise einzubringen. Bislang wurde diese Mustergestaltung entweder durch mechanisches Bearbeiten des Steingutes bewerkstelligt oder vor Aufbringen der Glasur des Substrats drucktechnisch oder direkt durch den Künstler auf das Steingut aufgebracht.

Aus der DE 78952 ist ein Verfahren zur Herstellung von Ätzungen auf Glas, Porzellan oder anderen glasierten Waren bekannt. Hierfür wird ein Staniolmaske, die mit Asphalt auf dem Gegenstand befestigt wird, verwendet.

In der JP-07 187 861 ist ein Verfahren zur Herstellung von Glasuren beschrieben. Dabei wird eine Maske verwendet und die Glasur mit Hilfe eines Spray-Verfahrens aufgetragen.

Das mechanische Bearbeiten des Steinguts eventuell auch der Glasur des Steinguts wiederum muß als ein unmittelbares bzw. direktes Bearbeiten des Steinguts angesehen werden. Dies hat zur Folge, daß wenn bei der Bearbeitung des Steinguts ein Fehler auftreten sollte, durch diesen Fehler das gesamte Substrat unbrauchbar wurde. Auch sind die künstlerischen Gestaltungsmöglichkeiten bei einzelnen Erstbearbeitungen des Künstlers somit eingeschränkt, da der Gesamteindruck erst nach Fertigstellung des Gesamtbildes auf dem Steingut beurteilt werden kann und gegebenenfalls Änderungen nachträglich nicht mehr möglich sind bzw. lediglich schwer durchzuführen sind.

Es ist deshalb Aufgabe der vorliegenden Erfindung, ein Verfahren zum Erzeugen einer Struktur in einem Substrat bereitzustellen, mit dem auf einfache Weise unterschiedliche Muster bzw. Gestaltungsforrnen in das Substrat eingebracht werden können.

Diese Aufgabe wird mit den Merkmalen des Anspruchs 1 gelöst.

Erfindungsgemäß wird ein Substrat bereitgestellt, welches eine erste Schicht aufweist. Danach wird eine Art Maske erstellt, die die Form der zu erstellenden bzw. einzubringenden Struktur aufweist und die die erste Schicht teilweise entsprechend der Form der einzubringenden Struktur abdeckt. Nach Abdecken der ersten Schicht wird eine zweite Schicht so auf das Substrat aufgebracht, daß die Freiflächen der Maske und somit ebenfalls die erste Schicht durch die zweite Schicht abgedeckt wird. Nach Aufbringung der zweiten Schicht wird dann die Maske samt darauf befindlicher zweiter Schicht abgelöst, so daß die Negativform der Struktur in der zweiten Schicht zu erkennen ist. Nach Ablösen der Maske wird diese mit einem Lösungsmittel kontaktiert, welches beispielsweise geeignet ist, die erste Schicht abzutracen. Nachdem in diesem Fall die erste Schicht abgetragen wird, wird die zweite Schicht abgelöst. Auf diese Weise wird eine entsprechend der Maske ausgebildete Struktur in dem Substrat erzeugt.

Mit diesem Verfahren ist somit ein umständliches mechanisches Bearbeiten des Substrates nicht mehr notwendig. Insbesondere kann die Maske entsprechend dem Erstellen eines Bildes durch einen Künstler erzeugt werden, so daß der Gestaltungsvielfalt von unterschiedlichen Motiven keine Grenzen gesetzt sind. Die Maske kann somit als Bild von dem Künstler direkt auf das Subtrat gezeichnet werden und bei Vorliegen eines Fehlers bzw. bei Nichtgefallen von dem Künstler unproblematisch ausgebessert bzw. abgeändert werden.

Weitere vorteilhafte Weiterbildungen der Erfindung sind Gegenstand der Unteransprüche.

Wird gemäß Anspruch 2 im Schritt a) eine Fliese als Substrat mit einer Glasur als erste Schicht bereitgestellt, so wird eine Möglichkeit geschaffen, handelsübliche Fliesen mit einem Muster zu versehen, welches sich der Kunde in Absprache mit dem Künstler erstellen lassen kann. Auch bei Nichtgefallen des als Maske aufgetragenen Bildes kann der Künstler in Abstimmung mit dem Kunden Änderungen vornehmen, ohne dabei die Fliese als solche beschädigt zu haben. Auf diese Weise wird die Ausschußrate bei Erstellen eines auf Fliesen abgebildeten Musters verringert. Insbesondere wird gemäß Anspruch 2 ein spezieller Effekt herbeigeführt, der darin entsteht, daß das Muster matt gegenüber der mit Glasur versehenen Fliese erscheinen kann.

Wird gemäß Anspruch 3 lediglich ein Substrat mit einer polierten Oberfläche als erste Schicht bereitgestellt, so können auf einfache Weise unterschiedliche Effekte durch den Grad der Politur und dem entsprechend matt erscheinenden Muster erzielt werden.

Wird gemäß Anspruch 4 als Maske ein Klebeband verwendet, so kann dieses Klebeband beim vorsichtigen Ablösen mehrfach verwendet werden und insbesondere kann ein in dem Klebeband enthaltenes Muster mehrfach auf unterschiedliche Substrate aufgeklebt werden und somit das gleiche Muster aber mit unterschiedlichster Ausrichtungen erzeugt werden. Wird ferner gemäß Anspruch 4 als Maske ein Kautschukmaterial verwendet, so können unterschiedlichen Lösungsmitteln zum Abtragen der ersten Schicht Rechnung getragen werden.

Generell hat es sich herausgestellt, daß gemäß Anspruch 5 als zweite Schicht eine lösemittelbeständige Schicht herangezogen wird, da es sich in der Regel gezeigt hat, daß das Abtragen der ersten Schicht auf einfache Weise mit Säuren herbeigeführt werden kann.

Wird gemäß Anspruch 6 als lösemittelbeständige Schicht Asphaltlack mit vorzugsweise beigemischten Methylethylketon verwendet, so wird ein Material herangezogen, welches einen hohen Grad an Lösemittelständigkeit aufweist und einfach mit einem Pinsel oder ähnliches 30 bis 40 um dick gleichmäßig aufgetragen werden kann. Ferner hat der Asphaltlack die Eigenschaft, daß dieser innerhalb von 10 Minuten austrocknen kann und die weiteren Verfahrensschritte ohne merkliche Fehlzeiten nacheinander abgearbeitet werden können. Es hat sich auch als vorteilhaft für eine bessere Bearbeitung und Verarbeitung erwiesen, den Asphaltlack mit Balsamterpentinöl zu verdünnen.

Durch die Beimischung von Methylethylketon in Asphaltlack gemäß Anspruch 6 wird der Vorteil erzielt, daß der Härtegrad des Asphaltlacks auf einfache Weise eingestellt werden kann.

Je nach Anwendungsbedarf hat es sich gemäß Anspruch 7 als besonders vorteilhaft erwiesen, wenn als lösemittelbeständiae Schicht eine eisenoxidhaltige Mischung, beispielsweise in den Farben braun, kobaltblau, orange oder gelb oder ein Nickeltitan in der Farbe gelb oder auch Mennige (Pb₃O₄) verwendet wurde, die ebenfalls die zur Durchführung des Verfahrens notwendige Lösemittelbeständigkeit aufwiesen.

Als effektives Lösungsmittel hat sich gemäß Anspruch 8 Kieselsäure (Si(OH)₄) gezeigt, welches vorzugsweise unverdünnt und/oder mit einer Einwirkzeit von 10 Stunden bzw. 60 Minuten verwendet wurde.

Um keine Rückstände bei Verwendung von Kieselsäure bzw. Fluatsäure entstehen zu lassen, hat es sich gemäß Anspruch 9 als vorteilhaft erwiesen, das Lösungsmittel nach Ablösen der ersten Schicht zu neutralisieren, um beispielsweise Fluatsalze, die sich auf dem Substrat aufgrund der Kieselsäure bilden können, zu entfernen.

Erfolgt gemäß Anspruch 10 das Kontaktieren des Substrats mit einem Lösungsmittel durch Aufbringen des Lösungsmittels, so wird gewährleistet, daß der Rest des Substrats unbehandelt bleibt und somit von dem Lösungsmittel nicht angegriffen wird. Auch wird durch das Aufbringen des Lösungsmittels erreicht, daß bei der Herstellung kein Tauchbad vorgenommen werden muß, sondern lediglich eine bestimmte Menge an Lösungsmittel verwendet werden muß.

Es hat sich gemäß Anspruch 11 als vorteilhaft erwiesen, wenn das Ablösen der Maske beispielsweise durch heißes Wasser erfolgt, da auf diese Weise das offene Substrat nicht verschmutzt wird, was beispielsweise dann erfolgt, wenn als Ablösemittel ein Balsamterpentinöl mit der Eigenschaft verwendet wird, das in das offene Substrat eindringt. Bei Verwendung von heißem Wasser ist allerdings zu beachten, daß dieses Wasser nicht trocknen sollte, da das Wasser kalkhaltig ist und Ränder auf dem Substrat bzw. Naturstein erzeugt werden. Hierzu ist es von Vorteil, das Wasser mit holzfreiem Papier bzw. Umweltpapier, insbesondere Zellstoff, aufzunehmen bzw. abzutragen.

Um die Nachteile bei Verwendung von Wasser zu kompensieren, ist es beispielsweise ebenfalls vorteilhaft, wenn gemäß Anspruch 12 das Ablösen der lösemittelbeständigen Schicht durch Heißluft, vorzugsweise bei 300°C oder mehr, erfolgt.

Wird gemäß Anspruch 13 eine dritte Schicht zur Erzeugung eines Glanzes aufgetragen, so wird mit dieser Maßnahme erreicht, daß die im Substrat erzeugte Struktur gleichzeitig versiegelt wird.

Es hat sich ebenfalls als vorteilhaft erwiesen, wenn gemäß Anspruch 14 die dritte Schicht aus mit 50%-igen Terpentinersatz verdünntem Leinöl, welches insbesondere gekocht, gebleicht oder kalt geschlagen ist, oder Standöl besteht, welches vorzuglsweise 0,5% Sekatif, insbesondere Kobalt-Sekatif, als Trockenmittel aufweist.

Wird gemäß Anspruch 16 das Kontaktieren des Substrats mit einem Lösungsmittel durch Einlegen des Substrats in das Lösungsmittel vorgenommen, so wird erreicht, daß ständig genügend Lösungsmittel das Substrat umgibt, um beispielsweise direkt in die zweite Schicht einzudringen. Durch das Eindringen des Lösungsmittels in die zweite Schicht wird erreicht, daß die zweite Schicht ausblutet und die zweite Schicht somit durch das Ausbluten als Katalysator fungiert, wobei die zweite Schicht in die erste Schicht des Substrats eindringt. Auf diese Weise wird erreicht, daß eine vorab vorgegebene Struktur als Freifläche unbelassen bzw. unbehandelt bleibt, die allerdings mit der zweiten Schicht versehene Fläche einen Unterschied zu der Strukturfläche aufweist. Über diese indirekte Methode wird ebenfalls eine Struktur an und in einem Substrat erzeugt.

Es hat sich als vorteilhaft herausgestellt, wenn gemäß Anspruch 17 als Lösungsmittel Wasser mit beigemischtem Anlauger verwendet wird.

Wird gemäß Anspruch 19 zusätzlich Salmiak, vorzugsweise 25% Salmiakgeist zu dem Lösungsmittel hinzugemischt, so ist das Ausbluten besser einstellbar.

Gewisse durch das Behandlungsverfahren entstehende Spurenelemente können dann gemäß Anspruch 20 beispielsweise mit Balsamterpentin oder Testbenzin bzw. Wundbenzin abgewaschen werden. Danach sollte das Substrat getrocknet werden. Zur Glanzerhöhung ist es beispielsweise vorteilhaft, das Substrat mit zellulosem Papier, welches mit Testbenzin getränkt ist, zu behandeln.

Wird gemäß Anspruch 21 zwischen der ersten und zweiten Schicht eine weitere Schicht vorgesehen, so kann über diese weitere Schicht sowohl das Ausbluten bzw. das Eindringen der zweiten Schicht in die erste Schicht gesteuert werden und insbesondere können dadurch unterschiedliche Schattierungseffekte in der ersten Schicht herbeigeführt werden.

Als besonders vorteilhaft hat sich herausgestellt, wenn die weitere Schicht parafinhaltig ist.

Wird beispielsweise gemäß Anspruch 25 als Substrat Glas verwendet, welches beispielsweise auch ein Glas eines Spiegels sein kann, so können je nach Erzeugen einer Struktur in dem Glas spezielle Effekte bzw. Facetteneffekte herbeigeführt werden, welche beispielsweise im Nahbereich unsichtbar sind, allerdings im Fernbereich, d.h. beispielsweise >1 m als Struktur erkennbar werden. Hierbei hat es sich als besonders vorteilhaft herausgestellt, wenn als Lösungsmittel Kieselsäure (Si(OH)₄) verwendet wird und das Glas oder der Spiegel in eine Mischung eingelegt wird, welche beispielsweise Borsäure (H₃BO₃), Hirschhomsalz (CH₅NO₃), Ammoniumcarbonat ((NH₄)₂CO₃), Oxalsäure (C₂H₂O₄x2H₂O), Weinsäure bzw. Gries (C₄H₆O₆), Natriumsulfat (Na₂SO₄), Nitrilotriessigsäure (C₆H₉NO₆) sowie Titriplex III (C₁₀H₁₄N₂Na₂O₈x2H₂O) enthält. Auf diese Weise wird entweder ein Mamoriereffekt oder der oben beschriebene Effekt erhalten, welcher aus dem Fernbereich betrachtet sichtbar wird.

Demgegenüber hat sich gemäß Anspruch 26 es als vorteilhaft herausgestellt, wenn beispielsweise als Substrat beschichtetes Holz, wie z.B. im Küchenbereich verwendet, herangezogen wird, dieses mit einem Lösungsmittel mit einer Mischung aus Wasser und Hirschhornmehl behandelt wird, welches zusätzlich vorzugsweise mit Bimsmehl vermischt ist. Auf diese Weise wird ein besonderer Effekt, d.h. Schattierungseffekt, der in der Beschichtung des Holzes vorhandenen Struktur herbeigeführt.

Weitere vorteilhafte Ausgestaltungen der Erfindung sind Gegenstand der übrigen Unteransprüche.

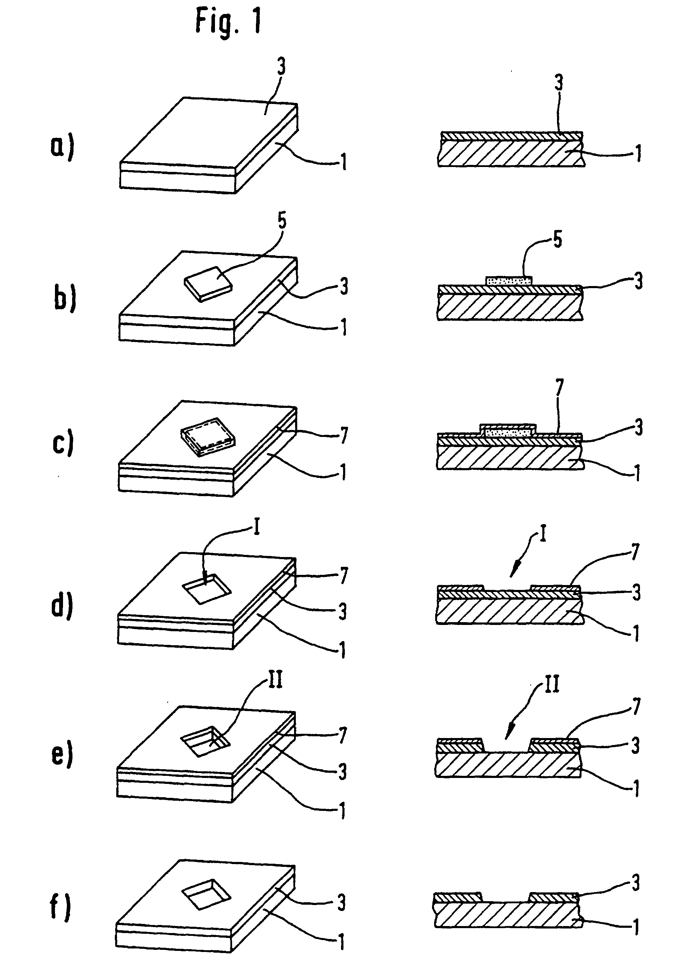

Unter Bezugnahme auf die Figur 1 soll eine Ausgestaltung der Erfindung, näher erläutert werden, die in den Figuren 1a bis 1f jeweils eine perspektivische und eine Schnittansicht eines zur Durchführung des erfindungsgemäßen Verfahrens geeigneten Substrat als Fliese mit Glasur zeigt.

In Fig. 1a ist perspektivisch eine Fliese als Substrat (1) mit einer ersten Schicht (3) gezeigt. Auf dieses Substrat (1) wird eine Maske auf die erste Schicht (3) aufgelegt, wobei die Maske (5) ein bestimmtes Motiv, hier eine Raute, zeigen kann (s. Fig.1b). Die Maske selbst kann jedoch jede andere beliebig ausgestaltete Form aufweisen, bis hin zu Ornamenten bzw. Porträts.

Gemäß Fig. 1c wird auf das so vorbereitete Substrat mit Maske eine weitere zweite Schicht 7 aufgetragen.

Nach Aufbringung dieser zweiten Schicht wird gemäß Fig.1d die Maske abgelöst, so daß ein Teil der ersten Schicht (3) freigelegt wird (siehe Pfeil I). Nach Ablösen der Maske (5) wird ein Lösungsmittel aufgebracht, um die erste Schicht, d.h. die freigelegte Fläche I abzutragen. Gemäß Fig. 1e wird nach Ablösen der ersten Schicht ein Teil des Substrates freigelegt (siehe Pfeil II). Nachdem die erste Schicht teilweise abgetragen wird, wird die zweite Schicht (7) abgelöst, so daß entsprechend der Maske ein in der ersten Schicht enthaltenes Muster vorhanden ist, d.h. das Substrat entsprechend der Maske (5) freigelegt ist.

Generell ist es somit möglich, eine Struktur in der Fliese direkt einzubringen, ohne dabei eine mechanische Bearbeitung mittels Bohren, Fräsen, Klopfen oder Meißeln durchführen zu müssen.

Es hat sich auch als vorteilhaft erwiesen, daß beispielsweise eine Schellackschicht bzw. selbstklebende Folie auf die fertige Fliese aufgebracht wird, um einen besonderen Schutz der so hergestellten Fliese herbeizuführen. Mit dieser Maßnahme wird beispielsweise ein doppelter Schutz des Substrats bzw. der Fliese herbeigeführt.

Durch das erfindungsgemäße Verfahren wird somit eine vereinfachte Handhabung hinsichtlich von Steinmetzarbeiten insbesondere bei dem Erstellen von Inschriften auf Grabsteinen ermöglicht.

Generell ist es auch möglich, daß das erfindungsgemäße Verfahren mehrfach auf ein Substrat angewandt wird. Es ist hierbei allerdings zu beachten, daß die einzelnen Schichten des Subtrats und die jeweils zum Abtragen eingesetzten Lösungsmittel so aufeinander abgestimmt sind, daß die jeweils von den einzelnen Masken erstellten Strukturen nicht durch ein nachfolgend angewandtes Lösungsmittel angegriffen werden kann.

Es ist ebenso denkbar, daß als Substrat neben Fliesen auch sonstige im Sanitärbereich anzutreffende Gegenstände herangezogen werden können, wie z.B. Waschbekken, Bidet, Toilettenfuß und dergleichen.

## Patentansprüche

1. Verfahren zum Erzeugen einer Struktur in einem Substrat (1), welches folgende Schritte aufweist:
a) Bereitstellen eines eine erste Schicht (3) aufweisenden Substrats (1);
b) Erstellen einer Struktur, vorzugsweise eine Maske (5), welche die erste Schicht (3) teilweise abdeckt;
c) Aufbringen einer zweiten Schicht (7) auf das Substrat (1);
d) Ablösen der Struktur (5);
e) Kontaktieren des Substrats mit einem Lösungsmittel;
f) Ablösen der zweiten Schicht (7).

2. Verfahren nach Anspruch 1, **dadurch gekennzeichnet, daß** im Schritt a) eine Fliese als Substrat (1) mit einer Glasur als erste Schicht (3) bereitgestellt wird.

3. Verfahren nach Anspruch 1, **dadurch gekennzeichnet, daß** im Schritt a) ein Substrat (1) mit einer polierten Oberfläche als erste Schicht (3) bereitgestellt wird.

4. Verfahren nach einem der Ansprüche 1 bis 3, **dadurch gekennzeichnet, daß** im Schritt b) als Maske (5) ein Klebeband oder ein Kautschukmaterial verwendet wird bzw. die Maske aufgeklebt wird.

5. Verfahren nach einem der Ansprüche 1 bis 4, **dadurch gekennzeichnet, daß** im Schritt c) als zweite Schicht (7) eine lösungsmittelbeständige Schicht auf das Substrat (1) aufgetragen wird.

6. Verfahren nach Anspruch 5, **dadurch gekennzeichnet, daß** als lösungsmittelbeständige Schicht Asphaltlack vorzugsweise mit beigemischtem Methylethylketon verwendet wird.

7. Verfahren nach Anspruch 5, **dadurch gekennzeichnet, daß** als lösungsmittelbeständige Schicht eine eisenoxidhaltige Mischung in den Farben Braun, Kobaltblau, Orange oder Gelb oder ein Nickeltitan in der Farbe Gelb oder auch Mennige (Pb₃O₄) verwendet wird.

8. Verfahren nach einem der Ansprüche 1 bis 7, **dadurch gekennzeichnet, daß** im Schritt e) als Lösungsmittel Kieselsäure (Si(OH)₄), vorzugsweise unverdünnt und/oder mit 10 Stunden Einwirkzeit, verwendet wird.

9. Verfahren nach Anspruch 8, **dadurch gekennzeichnet, daß** mit einem weiteren Schritt el) das Lösungsmittel neutralisiert wird.

10. Verfahren nach einem der Ansprüche 1 bis 9, **dadurch gekennzeichnet, daß** im Schritt e) das Kontaktieren des Substrats mit einem Lösungsmittel durch Aufbringen des Lösungsmittels erfolgt, um die erste Schicht (3) abzutragen.

11. Verfahren nach einem der Ansprüche 1 bis 10, **dadurch gekennzeichnet, daß** im Schritt e) das Ablösen der lösungsmittelbeständigen Schicht durch heißes Wasser, vorzugsweise 50° Celsius und mehr, erfolgt.

12. Verfahren nach einem der Ansprüche 1 bis 11, **dadurch gekennzeichnet, daß** im Schritt f) das Ablösen der lösungsmittelbeständigen Schicht durch Heißluft, vorzugsweise bei 300°C und/oder mehr, erfolgt.

13. Verfahren nach einem der Ansprüche 1 bis 12, **dadurch gekennzeichnet, daß** mit einem weiteren Schritt g) eine dritte Schicht zur Erzeugung eines Glanzes auf das mit Struktur versehene Substrat aufgebracht wird.

14. Verfahren nach Anspruch 13, **dadurch gekennzeichnet, daß** die dritte Schicht aus mit vorzugsweise 50%-igem Terpentinersatz verdünntem Leinöl bzw. Standöl, welches vorzugsweise 0,5% Sekatif aufweist, besteht.

15. Verfahren nach Anspruch 13 oder 14, **dadurch gekennzeichnet, daß** die dritte Schicht aus kaltem Leinöl besteht.

16. Verfahren nach einem der Ansprüche 1 bis 8, **dadurch gekennzeichnet, daß** im Schritt e) das Kontaktieren des Substrats mit einem Lösungsmittel durch Einlegen des Substrats in das Lösungsmittel erfolgt.

17. Verfahren nach Anspruch 16, **dadurch gekennzeichnet, daß** als Lösungsmittel Wasser mit beigemischtem Anlauger verwendet wird.

18. Verfahren nach Anspruch 17, **dadurch gekennzeichnet, daß** der Anlauger unter 5% Natriumsilikat, Natriumperborat und über 30% Natriumphosphat enthält.

19. Verfahren nach einem der Ansprüche 17 oder 18, **dadurch gekennzeichnet, daß** zusätzlich Salmiak zu dem Lösungsmittel, vorzugsweise 25% Salmiakgeist, hinzugemischt wird.

20. Verfahren nach einem der Ansprüche 16 bis 19, **dadurch gekennzeichnet, daß** das Substrat abgewaschen und getrocknet wird.

21. Verfahren nach einem der Ansprüche 16 bis 20, **dadurch gekennzeichnet, daß** zwischen der ersten und zweiten Schicht eine weitere Schicht vorgesehen ist.

22. Verfahren nach Anspruch 21, **dadurch gekennzeichnet, daß** die weitere Schicht paraffinhaltig ist.

23. Verfahren nach einem der Ansprüche 1 bis 22, **dadurch gekennzeichnet, daß** die Schritte b), c) und d) durch ein Siebdruckverfahren ersetzt werden.

24. Verfahren nach einem der Ansprüche 1 bis 23, **dadurch gekennzeichnet, daß** als Substrat eine Feinsteinfliese oder Marmor verwendet wird.

25. Verfahren nach einem der Ansprüche 1 bis 23, **dadurch gekennzeichnet, daß** als Substrat Glas verwendet wird.

26. Verfahren nach Anspruch 26, **dadurch gekennzeichnet, daß** als Substrat ein beschichtetes Holz verwendet wird.

27. Verfahren nach Anspruch 26, **dadurch gekennzeichnet, daß** als Substrat eine Mischung aus Wasser und Hirschhornmehl verwendet wird, vorzugsweise zusätzlich mit Bimsmehl.

28. Verfahren nach Anspruch 27, **dadurch gekennzeichnet, daß** die erste Schicht mit Talkum poliert wird.

29. Verfahren nach einem der Ansprüche 1 bis 28, **dadurch gekennzeichnet, daß** die einzelnen Verfahrensschritte mehrfach durchgeführt werden.

## Claims

1. Method of producing a structure on a substrate (1), said method comprising the following Steps:
a) providing a substrate (1) showing a first layer (3);
b) preparing a structure, preferably a mask (5), which partially covers the first layer (3);
c) superimposing a second layer (7) on the substrate (1);
d) detaching the structure (5);
e) contacting the substrate with a solvent, and
f) detaching the second layer (7).

2. Method according to Claim 1, **characterised in that**, in Step a), a tile with a glaze is provided as first layer (3).

3. Method according to Claim 1, **characterised in that**, in Step a), a substrate (1) with a polished surface is provided as first layer (3).

4. Method according to any one of Claims 1 to 3, **characterised in that**, in Step b), an adhesive tape or a caoutchouc material is used as mask (5) resp the mask is pasted on.

5. Method according to any one of Claims 1 to 4, **characterised in that**, in Step c), a layer of solvent-resisting nature is, as second layer (7), applied to the substrate (1).

6. Method according to Claim 5, **characterised in that** asphalt varnish, preferably with admixed methyl ethyl ketone, is used as solvent-resisting layer.

7. Method according to Claim 5, **characterised in that** an iron oxide-containing mixture in the colours of Brown, Cobalt Blue, Orange or Yellow or a nickel titanium in the colour of Yellow or also minium (Pb₃O₄) is used as solvent-resisting layer.

8. Method according to any one of Claims 1 to 7, **characterised in that**, in Step e), silicic acid (Si(OH)₄), preferably undiluted and/or with an exposure time of 10 hours, is used as solvent.

9. Method according to Claim 8, **characterised in that**, by means of a further Step e1), the solvent is neutralised.

10. Method according to any one of Claims 1 to 9, **characterised in that**, in Step e), contacting the substrate with a solvent is effected by super-imposing the latter so as to remove the first layer (3).

11. , Method according to any one of Claims 1 to 10, **characterised in that**, in Step e), detaching the solvent-resisting layer is effected through hot water, preferably at 50° Centigrade and more.

12. Method according to any one of Claims 1 to 11, **characterised in that**, in Step f), detaching the solvent-resisting layer is effected through hot air, preferably at 300° Centigrade and/or more.

13. Method according to any one of Claims 1 to 12, **characterised in that**, by means of a further Step g), a third layer for bringing about a gloss is superimposed on the substrate provided with a structure.

14. Method according to Claim 13, **characterised in that** the third layer consists of linseed oil resp stand oil diluted with preferably 50 % turpentine substitute, which oil shows preferably 0.5 % of siccative.

15. Method according to Claim 13 or 14, **characterised in that** the third layer consists of cold linseed oil.

16. Method according to any one of Claims 1 to 8, **characterised in that**, in Step e), contacting the substrate with a solvent is effected by putting the substrate into the solvent.

17. Method according to Claim 16, **characterised in that** water with an admixed leaching agent is used as solvent.

18. Method according to Claim 17, **characterised in that** the leaching agent contains less than 5 % of sodium silicate, sodium perborate and more than 30 % of sodium phosphate.

19. Method according to Claim 17 or 18, **characterised in that** ammonium chloride, preferably 25 % of ammonia water, is additionally admixed to the solvent.

20. Method according to any one of Claims 16 to 19, **characterised in that** the substrate is washed and dried.

21. Method according to any one of Claims 16 to 20, **characterised in that**, between the first layer and the second layer, a further layer is provided.

22. Method according to Claim 21, **characterised in that** the further layer contains paraffin.

23. Method according to any one of Claims 1 to 22, **characterised in that** Steps b), c), and d) are replaced by a silk-screen process.

24. Method according to any one of Claims 1 to 23, **characterised in that** a fine matte tile or marble is used as substrate.

25. Method according to any one of Claims 1 to 23, **characterised in that** glass is used as substrate.

26. Method according to Claim 25, **characterised in that** coated wood is used as substrate.

27. Method according to Claim 26, **characterised in that** a mixture of water and hartshorn meal, preferably with the addition of pumice meal, is used as substrate.

28. Method according to Claim 27, **characterised in that** the first layer is polished with talcum.

29. Method according to any one of Claims 1 to 28, **characterised in that** the individual Method Steps are carried out repeatedly.

## Revendications

1. Procédé pour produire une structure dans un substrat (1), comportant les étapes suivantes :
a) Préparation d'un substrat (1) présentant une première couche (3);
b) Elaboration d'une structure, de préférence un masque (5), recouvrant en partie la première couche (3) ;
c) Apport d'une deuxième couche (7) sur le substrat (1) ;
d) Retrait de la structure (5) ;
e) Mise en contact du substrat à l'aide d'un solvant ;
f ) Retrait de la deuxième couche (7).

2. Procédé selon la revendication 1, caractérisé, à l'étape a), par la préparation d'un carreau servant de substrat (1) et comportant une glaçure comme première couche (3).

3. Procédé selon la revendication 1, caractérisé, à l'étape a), par la préparation d'un substrat (1) comportant une surface polie comme première couche (3).

4. Procédé selon l'une des revendications 1 à 3, caractérisé, à l'étape b), soit par l'utilisation comme masque (5) d'un ruban adhésif ou d'un matériau caoutchouc, soit par le collage du masque.

5. Procédé selon l'une des revendications 1 à 4, caractérisé, à l'étape c), par l'application sur le substrat (1), comme seconde couche (7), d'une couche résistante aux solvants.

6. Procédé selon la revendication 5, **caractérisé par** l'utilisation, pour la couche résistante aux solvants, de vernis bitumineux additionné de méthyléthylcétone de préférence.

7. Procédé selon la revendication 5, **caractérisé par** l'utilisation, pour la couche résistante aux solvants, d'un mélange contenant de l'oxyde de fer dans les tons marron, bleu cobalt, orange ou jaune, ou bien du jaune de titane-nickel, ou bien encore du minium de plomb (Pb₃O₄).

8. Procédé selon l'une des revendications 1 à 7, caractérisé, à l'étape e), par l'utilisation, comme solvant, d'acide silicique (Si(OH)₄), non dilué de préférence, et/ou avec une durée d'action de 10 heures.

9. Procédé selon la revendication 8, **caractérisé par** la neutralisation du solvant au cours d'une autre étape e1).

10. Procédé selon l'une des revendications 1 à 9, caractérisé, à l'étape e), par la mise en contact du substrat avec un solvant grâce à l'apport du solvant pour enlever la première couche (3).

11. Procédé selon l'une des revendications 1 à 10, caractérisé, à l'étape e), par le retrait de la couche résistante aux solvants au moyen d'eau chaude de préférence à 50°C ou plus.

12. Procédé selon l'une des revendications 1 à 11, caractérisé, à l'étape f), par le retrait de la couche résistante aux solvants au moyen d'air chaud, de préférence aux alentours de 300°C et/ou plus.

13. Procédé selon l'une des revendications 1 à 12, **caractérisé par** l'apport, au cours d'une autre étape g), d'une troisième couche destinée à produire un lustre sur le substrat muni d'une structure.

14. Procédé selon la revendication 13, **caractérisé par** la constitution de la troisième couche par de l'huile de lin diluée de préférence avec 50% de substitut d'essence de térébenthine, ou bien par de la standolie avec 0,5% de produit siccatif de préférence.

15. Procédé selon les revendications 13 ou 14, **caractérisé par** la constitution de la troisième couche par de l'huile de lin froide.

16. Procédé selon l'une des revendications 1 à 8, caractérisé, à l'étape e), par la mise en contact du substrat avec un solvant grâce à la mise en place du substrat dans le solvant.

17. Procédé selon la revendication 16, **caractérisé par** l'utilisation, comme solvant, d'eau additionnée de lessive de potasse.

18. Procédé selon la revendication 17, **caractérisé par** une lessive de potasse contenant moins de 5% de silicate de sodium, du perborate de sodium et plus de 30% de phosphate de sodium.

19. Procédé selon l'une des revendications 17 ou 18, **caractérisé par** l'addition supplémentaire d'ammoniaque au solvant, de préférence dans une proportion de 25% de liqueur ammoniacale.

20. Procédé selon l'une des revendications 16 à 19, **caractérisé par** le lavage et le séchage du substrat.

21. Procédé selon l'une des revendications 16 à 20, **caractérisé par** la prévision d'une autre couche entre la première et la deuxième couche.

22. Procédé selon la revendication 21, **caractérisé par** la teneur en paraffine de cette autre couche.

23. Procédé selon l'une des revendications 1 à 22, **caractérisé par** la substitution des étapes b), c) et d) par un procédé de sérigraphie.

24. Procédé selon l'une des revendications 1 à 23, **caractérisé par** l'utilisation d'un carreau en pierre fine ou de marbre comme substrat.

25. Procédé selon l'une des revendications 1 à 23, **caractérisé par** l'utilisation de verre comme substrat.

26. Procédé selon la revendication 25, **caractérisé par** l'utilisation de bois revêtu comme substrat.

27. Procédé selon la revendication 26, **caractérisé par** l'utilisation, comme substrat, d'un mélange d'eau et de corne de cerf pulvérisée additionnée de poudre de pierre ponce de préférence.

28. Procédé selon la revendication 27, **caractérisé par** le polissage de la première couche avec du talc.

29. Procédé selon l'une des revendications 1 à 28, **caractérisé par** la réalisation des différentes étapes du procédé à plusieurs reprises.
